# FASCICULE DE BREVET EUROPEEN

(11) **EP 4 060 159 B1**
(45) Date de publication et mention de la délivrance du brevet: **15.10.2025**
(21) Numéro de dépôt: 22160263.4
(22) Date de dépôt: 04.03.2022
(51) Int. Cl.: E06B 9/323, E06B 9/52, A01M 29/34, E06B 9/30

(54) **DISPOSITIF DE PROTECTION POUR UN CAISSON DE STORE À LAMELLES**
SCHUTZVORRICHTUNG FÜR DEN KASTEN EINER LAMELLENJALOUSIE
PROTECTION DEVICE FOR A CASING OF A BLIND WITH SLATS

(30) Priorité: 16.03.2021 CH 2812021
(43) Date de publication de la demande: 21.09.2022
(73) Titulaire: Renon, Flavio, 1025 St-Sulpice (CH)
(72) Inventeur: Renon, Flavio, 1025 St-Sulpice (CH)
(74) Mandataire: Weihs, Bruno Konrad

(56) Documents cités:
- EP-A1- 1 584 781
- CH-A1- 705 397

## Description

### Domaine technique

L'invention concerne un dispositif de protection pour un caisson de store à lamelles horizontales ou store vénitien.

Elle concerne plus précisément un dispositif de protection pour un caisson de store à lamelles comprenant un élément de protection flexible et renforcé, bloquant mécaniquement l'accès à l'intérieur d'un caisson de store.

### Art antérieur

Les stores à lamelles horizontales, aussi appelé stores vénitiens sont bien connus et utilisés sur des fenêtres de bâtiments depuis de nombreuses années. Lorsqu'ils sont disposés devant une fenêtre par exemple, les stores à lamelles peuvent réguler efficacement le passage de lumière à travers cette fenêtre. Ils garantissent également la protection de la sphère privée en occultant la fenêtre et en empêchant ainsi que l'intérieur d'un bâtiment soit visible par une fenêtre depuis l'extérieur. En outre, le tampon d'air entre les lamelles fermées du store et la fenêtre assure une isolation et une protection thermique efficace.

Un store à lamelles (ou store vénitien) conventionnel comprend habituellement une pluralité de lamelles horizontales en bois, en PVC ou en aluminium. Le store comprend habituellement un mécanisme de relèvement comprenant de multiples de cordons ou câbles de relèvement attachés à une lamelle finale et permettant de déplacer les lamelles entre une position rétractée dans laquelle les lamelles sont condensées les unes contre les autres et n'obstrue donc pas la fenêtre et une position déployée dans laquelle les lamelles sont dispersées verticalement le long de la fenêtre. Un mécanisme de pivotement ou de réglage comprenant de multiples cordons ou câbles en échelle fixés aux différentes lamelles est habituellement présent et permet de modifier l'orientation des lamelles.

Lorsque les lamelles sont rétractées, elles se logent généralement dans un caisson situé dans ou sur le mur au-dessus de la fenêtre. Le caisson contient habituellement le mécanisme de relèvement, le mécanisme de pivotement ainsi qu'un moteur et des composantes électrique dans le cas d'un store à lamelles électrique.

Lorsque le store en monté face à une fenêtre à l'extérieur d'un bâtiment, le caisson et son espace intérieur sont en contact directe avec l'environnement extérieur. Des déchets déplacés par le vent qui peuvent s'accumuler à l'intérieur du caisson, entre les différents éléments contenus par le caisson. L'intérieur du caisson peut également être un lieu de nidification pour des animaux, tels que des oiseaux ou des insectes.

Lorsque des animaux se trouvent dans le caisson, par exemple car ils y ont construit un nid, les lamelles de store, les rebords de fenêtre ou la façade du bâtiment peuvent être salis par les déjections de ces animaux. Ces déjections peuvent engendrer la détérioration et la corrosion non seulement du store à lamelles mais également de la façade du bâtiment.

L'activité d'animaux peut également conduire à l'endommagement des composants du store à lamelle, par exemple lorsqu'un oiseau endommage des câbles avec son bec.

En outre, des insectes tels que des guêpes ou des frelons peuvent également construire un nid dans un caisson de store à lamelle. De telles situations peuvent s'avérer dangereuse pour les usagers ou les voisins proches du bâtiment à cause du caractère parfois agressif de ces insectes, notamment lorsqu'ils sont dérangés. Ceci peut notamment subvenir lorsque le store est rétracté ou déployé causant une sortie importante des insectes du nid et un risque d'attaques pour les personnes se trouvant dans le voisinage du store.

Le document EP 1 584 781 A1 décrit un store à lamelles présentant, de manière connue en soi, des lamelles, espacées les unes des autres à l'état abaissé, pouvant pivoter autour d'un axe et pouvant être regroupées lorsque le store est relevé. Pour empêcher la pénétration d'insectes, une bande de moustiquaire constituée d'un matériau souple est fixée respectivement entre deux lamelles adjacentes. Afin d'empêcher également la pénétration d'insectes sur le côté du store à lamelles, au niveau de l'embrasure, cette bande de moustiquaire est plus longue que les lamelles de sorte qu'elle fait saillie par rapport aux lamelles, latéralement, au niveau l'embrasure, où elle est en contact avec celle-ci ou bien avec un profilé fixé au niveau de l'embrasure.

Le document CH 705 397 A1 décrit un store vénitien comportant plusieurs lames destinées à fermer l'ouverture de la fenêtre ou de la porte. Un mécanisme élévateur est prévu pour soulever les volets. Les volets en tôle d'aluminium ou en plastique sont amenés en position horizontale de repos lorsque les lames sont en position fermée de telle sorte que la fente de la chambre du boîtier de rangement installé sur le cadre de la fenêtre soit fermée.

Il existe donc un besoin de protéger les caissons de store à lamelles de façon efficace tout en restant simple à mettre en œuvre, peu couteux et discret.

### Résumé de l'invention

La présente invention permet de remédier aux problèmes et inconvénients mentionnés précédemment et concerne un dispositif de protection flexible pour un caisson de store à lamelles selon la revendication 1.

L'invention concerne également un store à lamelles comprenant un caisson dans lequel est arrangé au moins un dispositif de protection selon la revendication 11.

D'autres caractéristiques avantageuses de l'invention sont indiquées dans les revendications dépendantes.

L'invention concerne un dispositif de protection flexible 1 pour un caisson de store à lamelles, le dispositif comprenant deux bords longitudinaux et deux bords transversaux, les bords longitudinaux étant plus long que les bords transversaux. Le dispositif comprend en outre des moyens d'attachement longitudinaux arrangés sur les deux bords longitudinaux du dispositif de protection flexible et configurés pour fixer le premier bord longitudinal du dispositif de protection flexible à une lamelle de store et le deuxième bord longitudinal à un caisson de store à lamelles. Le dispositif comprend des éléments de renfort transversaux arrangés sur les deux bords transversaux du dispositif de protection flexible et configurés pour diminuer la flexibilité et renforcer les deux bords transversaux du dispositif de protection flexible.

Selon un mode de réalisation avantageux, le dispositif de protection flexible est perméable à l'air.

Selon un autre mode de réalisation de l'invention, le dispositif de protection flexible comprend un filet, un tissu ou un grillage.

Toujours selon un mode de réalisation de l'invention, le dispositif de protection flexible est d'une longueur sensiblement similaire à une longueur du caisson de store à lamelles et d'une largeur sensiblement similaire à au moins la moitié d'une largeur de caisson de store à lamelles.

Selon un mode de réalisation, les moyens d'attachement longitudinaux comprennent au moins un système de fixation choisi parmi une fermeture auto agrippante, une colle, un adhésif, un ruban adhésif, une vis, ou une pince de fixation.

Selon un autre mode de réalisation, les moyens d'attachement longitudinaux comprennent une lame d'un premier matériau le premier matériau étant plus rigides que le dispositif de protection flexible.

Selon un mode de réalisation, le premier matériau comprend une résine, un plastique, un silicone, un tissu ou de l'aluminium.

Selon un mode de réalisation de l'invention, les éléments de renfort transversaux comprennent un deuxième matériau et sont disposés sur au moins une des surfaces des deux deuxièmes bords du dispositif de protection flexible, le deuxième matériau étant plus rigides que le dispositif de protection flexible.

Selon un autre mode de réalisation avantageux, les éléments de renfort transversaux comprennent un repli d'une partie du dispositif de protection flexible sur lui-même, le repli étant imprégné du deuxième matériau.

Selon un autre mode de réalisation de l'invention, le deuxième matériau comprend une résine, un plastique, un caoutchouc ou un silicone.

### Brève description des figures

D'autre caractéristiques et avantages de la présente invention apparaitront plus clairement à la lecture de la description détaillée et illustrés par les dessins annexés dans lesquels :
la figure 1 représente une vue de face du dispositif de protection flexible comprenant des moyens d'attachement longitudinaux et des éléments de renfort transversaux selon l'invention ;
la figure 2 illustre une vue de côté du dispositif de protection flexible et d'un élément de renfort transversal selon l'invention ;
la figure 3 contient une vue en coupe d'un store à lamelles en position rétractée dans le caisson, comprenant deux dispositifs de protection flexible selon l'invention ; et
la figure 4 représente une vue en coupe d'un store à lamelles en position déployée comprenant deux dispositifs de protection flexible selon l'invention.

### Description détaillée de l'invention

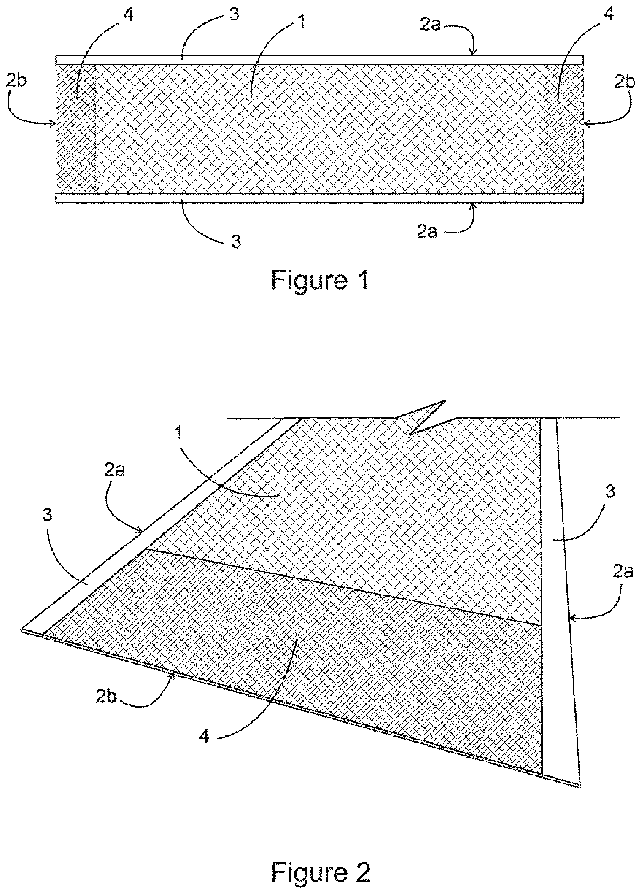

Les figures 1 et 2 illustrent le dispositif de protection flexible 1 pour un caisson de store à lamelles selon l'invention.

Le dispositif de protection flexible 1 comprend deux bords longitudinaux 2a et deux bords transversaux 2b, les deux bords longitudinaux 2a étant plus long que les deux bords transversaux 2b.

Le dispositif de protection 1 comprend en outre des moyens d'attachement longitudinaux 3 arrangés sur les deux bords longitudinaux 2a du dispositif de protection flexible 1.

Les moyens d'attachement longitudinaux 3 sont configurés pour fixer le dispositif de protection flexible 1 à une lamelle 5 de store et à un caisson 6 de store à lamelles.

Le dispositif de protection 1 comprend des éléments de renfort transversaux 4 arrangés sur les deux bords transversaux 2b du dispositif de protection flexible 1.

Les éléments de renfort transversaux 4 sont configurés pour diminuer la flexibilité et renforcer les deux bords transversaux 2b du dispositif de protection flexible 1.

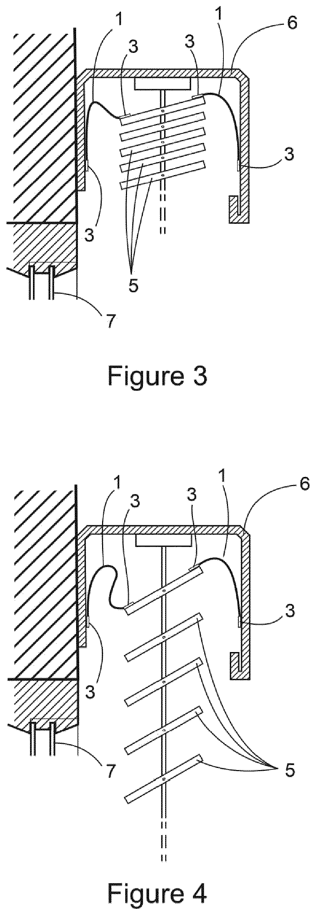

Le dispositif de protection 1 est flexible afin de pouvoir s'adapter à la position de la lamelle 5 à laquelle il est fixé. En effet, comme cela est visible sur les figures 3 et 4, la lamelle 5 peut changer de position verticale en fonction que le store soit en position rétractée ou déployée. Les figures 3 et 4 illustrent un store à lamelles dans une position rétractée ou déployée, arrangé devant une fenêtre 7. En position rétractée, la première lamelle 5 du store, à laquelle le dispositif de protection flexible 1 peut être attaché est située près du fond du caisson 6. Lorsque le store est déployé, la première lamelle va s'éloigner verticalement du fond du caisson est être positionnée plus bas qu'en position rétractée. Un dispositif de protection flexible 1 peut se plier ou se déformer afin prendre en compte les variations de positions des lamelles et donc assurer un protection mécanique constante que les lamelles soient rétractées ou déployées. De plus, un dispositif de protection 1 flexible permet également de ne pas augmenter les efforts nécessaires à la rétractation ou déploiement du store à lamelle, que cela soit par un utilisateur via un système de manivelle ou par un moteur électrique. Finalement, la flexibilité du dispositif de protection 1 va permettre de réduire le stress mécanique subit par le dispositif lorsque le store change de positions et augmenter sa durée de vie en limitant les risques de déchirement ou de cassure.

Le dispositif de protection flexible 1 peut être perméable à l'air. De cette façon, l'air peut circuler librement entre l'extérieur et l'intérieur du caisson de store à lamelles. Ceci permet d'éviter une accumulation d'humidité qui pourrait entrainer la corrosion des divers éléments du store à lamelles présents dans le caisson. En outre, une bonne circulation d'air permet également d'éviter l'apparition de moisissure à l'intérieur du caisson.

Le dispositif de protection flexible 1 est perméable à l'air mais doit permettre d'éviter que des animaux, tels que des oiseaux ou des insectes puissent pénétrer dans le caisson 6 du store, via l'espace présents entre les lamelles et les parois du caisson.

Le dispositif de protection flexible 1 peut donc comprendre sur toute sa surface ou sur une partie de sa surface un filet, un tissu respirable, un grillage ou tout autre élément permettant d'empêcher un oiseau ou un insecte de passer à travers le dispositif mais en permettant une circulation de l'air.

L'espace des mailles du filet peuvent par exemple être comprise en 0.2 mm et 5 mm.

Le dispositif de protection flexible 1 est préférentiellement de forme allongée.

Le dispositif 1 peut être de forme sensiblement rectangulaire ou quadrilatérale.

La longueur du dispositif de protection flexible 1 peut être sensiblement similaire à la longueur du caisson 6 de store à lamelles. Alternativement, la longueur du dispositif 1 peut être légèrement inférieure à la longueur du caisson 6 de store à lamelles.

La largeur du dispositif 1 peut être sensiblement similaire à au moins la moitié d'une largeur de caisson 6 de store à lamelles.

Préférentiellement, la largeur du dispositif 5 cm est de 25 cm, plus préférentiellement entre 10 cm et 20 cm, atour du 14-15 cm.

Les dimensions du dispositif de protection flexible 1 permettent d'assurer un encombrement maximal de l'espace situé entre les lamelles 5 et le caisson du store afin d'éviter qu'un animal tels qu'un oiseau ou un insecte puisse se glisser entre le dispositif de protection flexible 1 et les parois du caisson 6. En outre, elles permettent de prendre en compte le déplacement vertical des lamelles 5 du store lorsqu'elles sont déplacées d'une position rétractée à une position déployée ainsi que le déplacement des lamelles 5 lorsque l'orientation des lamelles 5 est modifiée par exemple.

La longueur et la largeur du dispositif de protection flexible 1 peut varier et être adaptées à la dimension d'un caisson 6 de store particulier ainsi qu'à la taille et à l'amplitude de déplacement des lamelles 5 du store entre une position rétractée et une position déployée.

Les moyens d'attachement longitudinaux 3 peuvent être arrangés sur une partie ou sur la totalité des deux bords transversaux 2a du dispositif de protection flexible 1.

Les moyens d'attachement longitudinaux 3 peuvent être en une section unique ou en plusieurs sections indépendantes, réparties le long des deux bords transversaux 2a.

Le dispositif de protection flexible 1 peut comprendre deux moyens d'attachement ou plus.

Le dispositif de protection 1 peut comprendre 2 à 6 moyens d'attachement réparties sur chacun des deux bords transversaux 2a.

Les moyens d'attachement longitudinaux 3 peuvent comprendre un système de fixation.

Le système de fixation peut être choisi parmi une fermeture auto agrippante, une colle, un adhésif par exemple un adhésif en silicone, un ruban adhésif, une pluralité de vis, ou une pince de fixation.

Les moyens d'attachement longitudinaux 3 peuvent comprendre plusieurs systèmes de fixation répartis le long des moyens d'attachements longitudinaux 3.

Ces systèmes de fixation peuvent être choisi parmi une fermeture auto agrippante, une colle, un adhésif par exemple un adhésif en silicone, un ruban adhésif, une pluralité de vis, ou une pince de fixation. Les systèmes d'attachement peuvent être tous du même type ou de types différents. La fixation par adhésif en silicone a l'avantage d'être facilement amovible pour facilement détacher et rattacher les d'attachement longitudinaux 3.

Le système de fixation peut être un système de fermeture auto aggripante tel que du velcro.

Comme illustré aux figures 3 et 4, les moyens d'attachement longitudinaux 3 sont configurés pour fixer le premier bord longitudinal 2a du dispositif de protection flexible 1 à une lamelle 5 de store et le deuxième bord longitudinal 2a à un caisson 6 de store à lamelles.

Le premier bord longitudinal 2a peut être attaché à la première lamelle 5 du store par les moyens d'attachement longitudinaux 3, la première lamelle 5 correspondant à la lamelle 5 la plus proche du haut du caisson 6 de store.

Le premier bord longitudinal 2a peut être attaché à la deuxième, la troisième ou la quatrième lamelle 5 du store.

Préférentiellement, Le premier bord longitudinal 2a est attaché à une lamelle 5 se trouvant toujours dans le caisson 6 du store lorsque le store est en position déployée afin de bloquer mécaniquement l'accès au caisson 6 même lorsque le store est déployé.

Le deuxième bord longitudinal 2a peut être attaché sur la paroi interne du caisson 6 de store.

Alternativement, Le deuxième bord longitudinal 2a peut être fixé sur la tranche extérieur du caisson 6 faisant face au sol.

Les moyens d'attachement longitudinaux 3 peuvent comprendre une lame comprenant un premier matériau, le premier matériau étant plus rigide ou moins flexible que le dispositif de protection flexible 1. Cette lame peut servir comme surface pour placer un adhésif pour l'attachement, pour exemple pour placer un adhésif.

La lame peut être arrangée entre le système de fixation et le dispositif de protection flexible 1.

Alternativement, la lame peut être arrangée de façon à ce que le dispositif de protection flexible 1 se trouve entre la lame et le système de fixation.

Le premier matériau peut comprendre une résine, un plastique, un plastique souple, un silicone, un tissu ou de l'aluminium. Le premier matériau peut également être un mélange de deux ou plusieurs de ces matériaux.

La lame peut comprendre une lame en plastique souple.

La lame permet de rigidifier les bords 2a du dispositif de protection flexible 1. La lame permet également de renforcer les bords 2a du dispositif 1. Ceci améliore la durabilité de l'attachement du dispositif de protection flexible 1. Ceci permet également de réduire les risques de détachement ou désolidarisation du dispositif de protection flexible des moyens d'attachement 3 à cause de contraintes mécanique, par exemple quand la lamelle 5 à laquelle est fixé le dispositif se déplace ou change d'orientation.

Les moyens d'attachement 3 peuvent fixer le dispositif de protection flexible 1 de manière amovible, par exemple à l'aide de velcro (fermeture auto agrippante) d'adhésif ou de vis.

Les éléments de renfort transversaux 4 sont arrangés sur les deux bords transversaux 2b du dispositif de protection flexible 1.

Les éléments de renfort transversaux 4 sont configurés pour diminuer la flexibilité des deux bords transversaux 2b.

En outre, les éléments de renfort transversaux 4 sont configurés pour renforcer les deux bords transversaux 2b.

Les éléments de renfort transversaux 4 comprennent un deuxième matériau étant plus rigide ou moins flexible que le dispositif de protection flexible 1.

Le deuxième matériau peut comprendre une résine, un plastique, un plastique souple, un caoutchouc ou un silicone. Le deuxième matériau peut également comprendre un mélange de ces matériaux.

Les éléments de renfort transversaux 4 peuvent être arrangés sur une ou les deux surfaces des bords transversaux 2b du dispositif de protection 1. Les éléments de renfort transversaux 4 peuvent en outre s'étendre sur toute la longueur des bords transversaux 2b, soit en un élément unique ou en plusieurs éléments distincts arrangés le long des bords transversaux 2b.

Les éléments de renfort transversaux 4 peuvent s'étendre de la première face à la deuxième face du dispositif de protection flexible, recouvrant ainsi la tranche du dispositif de protection flexible 1, au niveau des bords transversaux 2b.

Les bords transversaux 2b peuvent être imprégner par le deuxième matériau afin que le deuxième matériau recouvre les deux surfaces, la tranche ainsi que l'intérieur des bords transversaux 2b. Le deuxième matériau peut ainsi être arrangé à l'intérieur du dispositif de protection flexible 1, par exemple entre les mailles du dispositif 1.

Les éléments de renfort transversaux 4 peuvent comprendre un repli d'une partie du dispositif de protection flexible 1 sur lui-même au niveau des bords transversales 2b.

Les parties repliées peuvent être cousues ou collées entre-elles afin de les maintenir en position repliée.

Le dispositif protection flexible 1 étant replié sur lui-même au niveau des bords transversaux 2b, les parties repliées comprennent donc deux couches du dispositif de protection flexible 1 permettant ainsi de rigidifier et de renforcer les bords transversaux 2b.

Le dispositif de protection flexible 1 peut être replié sur lui-même plusieurs fois, par exemple entre 2 et 5 fois afin de rigidifier de manière plus importante les bords transversaux 2b du dispositif 1.

Les parties repliées du dispositif 1 peuvent être imprégnées du deuxième matériau afin d'augmenter leurs rigidités, de les renforcer et de les maintenir en position repliée. L'imprégnation permet au deuxième matériau de recouvrir en partie le dispositif de protection flexible 1 au niveau des bords transversaux 2b ainsi que l'intérieur du dispositif 1, au niveau des bords transversaux 2b, par exemple dans les mailles du dispositif 1. L'imprégnation permet en outre que les couches internes des parties repliées du dispositif de protection 1 soient également imprégnées du deuxième matériau.

Le dispositif de protection flexible 1 peut être replié sur une distance de 1cm à 5cm. Préférentiellement, le dispositif de protection flexible 1 est replié sur une distance 4 cm.

Le dispositif peut également être replié sur une lame comprenant le deuxième matériau, la lame étant arrangée entre les deux couches du dispositif, au niveau de la partie repliée.

Les éléments de renfort transversaux 4 arrangés sur les deux bords transversaux 2b permettent d'un part de rigidifier les bords transversaux 2b et d'autre part de les renforcer. Les bords transversaux 2b se trouve proche voir en contact avec les parois latérales du caisson 6 de store. Il est possible qu'un pli du dispositif de protection flexible 1 se forme quand le store est retracé ou déployé. Un tel pli peut avoir pour conséquence d'augmenter la taille de l'espace se trouvant entre un des bord transversal 2b et la paroi du caisson 6 permettant à des oiseaux ou des insectes de pénétrer dans le caisson 6 par cet espace. En augmentant la rigidité des bord transversaux 2b, le risque que le dispositif de protection forme un pli non désiré est réduit voir supprimé. De plus, cela permet d'éviter que des oiseaux force leur entrée dans le caisson en poussant un bord transversal 2b car un bord transversal 2b moins flexible ou plus rigide nécessiterait une plus grande force pour être pliée afin de dégager un espace d'entrée.

Les bord transversaux 2b sont de plus soumis à un stress mécanique important et peuvent être en contact avec les parois du caisson 6 de store. Ces contacts peuvent être une source de frottement lorsque le store est actionné et donc accélérer l'usure et la détérioration des bords transversaux 2b du dispositif de protection 1. Les éléments de renfort 4 permettent ainsi de diminuer l'usure, par exemple l'effilochage ou le déchirement du dispositif 1 et de réduire également les frottements entre les bords transversaux 2b et les parois du caisson 6. La durabilité du dispositif de protection flexible est ainsi améliorée.

Un store à lamelles peut comprendre au moins un dispositif de protection flexible 1 selon l'invention afin de protéger l'intérieur du caisson 6.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Un dispositif de protection flexible (1) pour un caisson de store à lamelles, le dispositif comprenant :
- deux bords longitudinaux (2a) et deux bords transversaux (2b), les bords longitudinaux (2a) étant plus long que les bords transversaux (2b) ; et
- des moyens d'attachement longitudinaux (3) arrangés sur les deux bords longitudinaux (2a) du dispositif de protection flexible (1) et configurés pour fixer le premier bord longitudinal (2a) du dispositif de protection flexible (1) à une lamelle (5) de store et le deuxième bord longitudinal (2a) à un caisson (6) de store à lamelles ;
**caractérisé en ce que** le dispositif comprend en outre :
- des éléments de renfort transversaux (4) arrangés sur les deux bords transversaux (2b) du dispositif de protection flexible (1) et configurés pour diminuer la flexibilité et renforcer les deux bords transversaux (2b) du dispositif de protection flexible (1).

2. Le dispositif selon la revendication 2, **caractérisé en ce que** le dispositif de protection flexible (1) est perméable à l'air.

3. Le dispositif selon l'une des revendications précédentes, **caractérisé en ce que** le dispositif de protection flexible (1) comprend un filet, un tissu ou un grillage.

4. Le dispositif selon l'une des revendications précédentes, **caractérisé en ce que** le dispositif de protection flexible (1) est d'une longueur sensiblement similaire à une longueur du caisson (6) de store à lamelles et d'une largeur sensiblement similaire à au moins la moitié d'une largeur de caisson (6) de store à lamelles.

5. Le dispositif selon l'une des revendications précédentes, **caractérisé en ce que** les moyens d'attachement longitudinaux (3) comprennent au moins un système de fixation choisi parmi une fermeture auto agrippante, une colle, un adhésif, un ruban adhésif, une vis, ou une pince de fixation.

6. Le dispositif selon l'une des revendications précédentes, **caractérisé en ce que** les moyens d'attachement longitudinaux (3) comprennent une lame d'un premier matériau le premier matériau étant plus rigides que le dispositif de protection flexible (1).

7. Le dispositif selon la revendication précédente, **caractérisé en ce que** le premier matériau comprend une résine, un plastique, un silicone, un tissu ou de l'aluminium.

8. Le dispositif selon l'une des revendications précédentes, **caractérisé en ce que** les éléments de renfort transversaux (4) comprennent un deuxième matériau et sont disposés sur au moins une des surfaces des deux deuxièmes bords (2b) du dispositif de protection flexible (1), le deuxième matériau étant plus rigides que le dispositif de protection flexible (1).

9. Le dispositif selon l'une des revendications précédentes, **caractérisé en ce que** les éléments de renfort transversaux (4) comprennent un repli d'une partie du dispositif de protection flexible (1) sur lui-même, le repli étant imprégné du deuxième matériau.

10. Le dispositif selon l'une des revendications 8 ou 9, **caractérisé en ce que** le deuxième matériau comprend une résine, un plastique, un caoutchouc ou un silicone.

11. Un store à lamelles comprenant un caisson dans lequel est arrangé au moins un dispositif de protection flexible (1) selon les revendications 1 à 10.

## Patentansprüche

1. Flexible Schutzvorrichtung (1) für einen Lamellenjalousiekasten, wobei die Vorrichtung aufweist:
- zwei Längsränder (2a) und zwei Querränder (2b), wobei die Längsränder (2a) länger als die Querränder (2b) sind; und
- Längsbefestigungsmittel (3), die an den zwei Längsrändern (2a) der flexiblen Schutzvorrichtung (1) angeordnet und ausgelegt sind, den ersten Längsrand (2a) der flexiblen Schutzvorrichtung (1) an einer Jalousielamelle (5) und den zweiten Längsrand (2a) an einem Lamellenjalousiekasten (6) zu fixieren ;
**dadurch gekennzeichnet, dass** die Vorrichtung außerdem aufweist:
- Querverstärkungselemente (4), die an den zwei Querrändern (2b) der flexiblen Schutzvorrichtung (1) angeordnet und ausgelegt sind, die Flexibilität zu verringern und die zwei Querränder (2b) der flexiblen Schutzvorrichtung (1) zu verstärken.

2. Vorrichtung nach Anspruch 2, **dadurch gekennzeichnet, dass** die flexible Schutzvorrichtung (1) luftdurchlässig ist.

3. Vorrichtung nach einem der vorhergehenden Ansprüche, **dadurch gekennzeichnet, dass** die flexible Schutzvorrichtung (1) ein Netz, ein Gewebe oder ein Gitter aufweist.

4. Vorrichtung nach einem der vorhergehenden Ansprüche, **dadurch gekennzeichnet, dass** die flexible Schutzvorrichtung (1) eine im Wesentlichen mit einer Länge des Lamellenjalousiekastens (6) vergleichbare Länge und eine im Wesentlichen mit mindestens der Hälfte einer Breite des Lamellenjalousiekastens (6) vergleichbare Breite hat.

5. Vorrichtung nach einem der vorhergehenden Ansprüche, **dadurch gekennzeichnet, dass** die Längsbefestigungsmittel (3) mindestens ein aus einem Klettverschluss, einem Leim, einem Klebstoff, einem Klebeband, einer Schraube oder einer Fixierungsklammer ausgewähltes Fixierungssystem aufweisen.

6. Vorrichtung nach einem der vorhergehenden Ansprüche, **dadurch gekennzeichnet, dass** die Längsbefestigungsmittel (3) eine Leiste aus einem ersten Material aufweisen, wobei das erste Material steifer als die flexible Schutzvorrichtung (1) ist.

7. Vorrichtung nach dem vorhergehenden Anspruch, **dadurch gekennzeichnet, dass** das erste Material ein Harz, einen Kunststoff, ein Silikon, ein Gewebe oder Aluminium aufweist.

8. Vorrichtung nach einem der vorhergehenden Ansprüche, **dadurch gekennzeichnet, dass** die Querverstärkungselemente (4) ein zweites Material aufweisen und auf mindestens einer der Flächen der zwei zweiten Ränder (2b) der flexiblen Schutzvorrichtung (1) angeordnet sind, wobei das zweite Material steifer als die flexible Schutzvorrichtung (1) ist.

9. Vorrichtung nach einem der vorhergehenden Ansprüche, **dadurch gekennzeichnet, dass** die Querverstärkungselemente (4) eine Faltung eines Teils der flexiblen Schutzvorrichtung (1) auf sich selbst aufweisen, wobei die Faltung mit dem zweiten Material getränkt ist.

10. Vorrichtung nach einem der Ansprüche 8 oder 9, **dadurch gekennzeichnet, dass** das zweite Material ein Harz, einen Kunststoff, einen Gummi oder ein Silikon aufweist.

11. Lamellenjalousie, aufweisend einen Kasten, in welchem mindestens eine flexible Schutzvorrichtung (1) nach den Ansprüchen 1 bis 10 angeordnet ist.

## Claims

1. Flexible protection device (1) for a slatted blind casing, the device comprising:
- two longitudinal edges (2a) and two transverse edges (2b), the longitudinal edges (2a) being longer than the transverse edges (2b); and
- longitudinal attachment means (3) arranged on the two longitudinal edges (2a) of the flexible protection device (1) and configured to fasten the first longitudinal edge (2a) of the flexible protection device (1) to a blind slat (5) and the second longitudinal edge (2a) to a slatted blind casing (6);
**characterized in that** the device also comprises:
- transverse reinforcing elements (4) arranged on the two transverse edges (2b) of the flexible protection device (1) and configured to reduce the flexibility and reinforce the two transverse edges (2b) of the flexible protection device (1).

2. Device according to Claim 2, **characterized in that** the flexible protection device (1) is permeable to air.

3. Device according to either of the preceding claims, **characterized in that** the flexible protection device (1) comprises a net, a fabric or a grating.

4. Device according to one of the preceding claims, **characterized in that** the flexible protection device (1) is of a length substantially similar to a length of the slatted blind casing (6) and of a width substantially similar to at least half of a width of the slatted blind casing (6).

5. Device according to one of the preceding claims, **characterized in that** the longitudinal attachment means (3) comprise at least one fastening system chosen from a hook-and-loop fastener, a glue, an adhesive, an adhesive tape, a screw, or a fastening clamp.

6. Device according to one of the preceding claims, **characterized in that** the longitudinal attachment means (3) comprise a strip of a first material, the first material being more rigid than the flexible protection device (1).

7. Device according to the preceding claim, **characterized in that** the first material comprises a resin, a plastic, a silicone, a fabric or aluminium.

8. Device according to one of the preceding claims, **characterized in that** the transverse reinforcing elements (4) comprise a second material and are disposed on at least one of the surfaces of the two second edges (2b) of the flexible protection device (1), the second material being more rigid than the flexible protection device (1).

9. Device according to one of the preceding claims, **characterized in that** the transverse reinforcing elements (4) comprise a fold of a part of the flexible protection device (1) on itself, the fold being impregnated with the second material.

10. Device according to either of Claims 8 and 9, **characterized in that** the second material comprises a resin, a plastic, a rubber or a silicone.

11. Slatted blind comprising a casing in which at least one flexible protection device (1) according to Claims 1 to 10 is arranged.
